# EUROPÄISCHE PATENTSCHRIFT

(11) **EP 0 443 123 B1**
(45) Veröffentlichungstag und Bekanntmachung des Hinweises auf die Patenterteilung: **08.09.1993**
(21) Anmeldenummer: 90123265.2
(22) Anmeldetag: 05.12.1990
(51) Int. Cl.: B28D 1/22, B23D 15/12, B23Q 1/18, B23Q 1/14, F16H 19/00

(54) **Steinspalter**
Stone cutting machine
Machine à couper de la pierre

(30) Priorität: 17.02.1990 DE 4005071
(43) Veröffentlichungstag der Anmeldung: 28.08.1991
(73) Patentinhaber: ALMI MACHINEFABRIEK VRIEZENVEEN B.V., NL-7671 JK VRIEZENVEEN (NL)
(72) Erfinder: Landhuis, Jan Jacob, NL-7671 WB Vriezenveen (NL)
(74) Vertreter: Habbel, Hans-Georg, Dipl.-Ing.

(56) Entgegenhaltungen:
- DE-A- 2 254 989
- DE-C- 98 121
- DE-C- 139 775
- DE-C- 2 815 744
- FR-A- 1 429 688
- GB-A- 2 087 783

## Beschreibung

Die Erfindung bezieht sich auf einen Steinspalter gemäß dem Oberbegriff des Hauptanspruches.

Ein gattungsbildender Steinspalter wird in der DE-28 15 744 C2 beschrieben und hat sich in der Praxis ausgezeichnet bewährt.

Weiter ist es bekannt (wie dies besonders deutlich die DE-OS 22 54 989 zeigt), die Kraftübertragung zur Schneide über zwei an den Endbereichen der Schneide angeordnete Exzenter zu erzeugen. An einem Exzenter ist ein Handhebel drehfest angeschlossen, während der andere Exzenter über eine an dem Handhebel und an einem am letztgenannten Exzenter drehfest angeschlossenen weiteren Hebel angelenkte Stange mit dem Handhebel in Wirkverbindung steht.

Durch eine solche Anordnung wird erreicht, daß in beiden axialen Endbereichen der Schneiden im wesentlichen ein gleicher Druck bei Betätigung des Handhebels erzeugt wird, was insbesondere dann von großer Bedeutung ist, wenn nicht durchgehende Schneiden, sondern Einzelschneiden eingesetzt werden.

Dieser Steinspalter hat jedoch den Nachteil, daß eine Vielzahl von Drehlagerstellen vorhanden ist, die bei dem rauhen Betrieb eines Steinspalters schnell zu Verschleißerscheinungen neigen, insbesondere dadurch, da bei der unmittelbar nach dem Schnitt erfolgenden Entspannung ein Schlag in alle Gelenkteile eingetragen wird.

Der Erfindung liegt die Aufgabe zugrunde, den Antrieb eines Steinspalters zu verbessern, um damit die Lebensdauer des Steinspalters zu erhöhen.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß ein Exzentertrieb eingesetzt wird, der aus zwei Exzenterrädern besteht, die miteinander über eine Zahnstange antriebsmäßig verbunden sind. Die Hebelvorrichtung greift dabei an dem einen Exzenterrad an, wobei das Exzenterrad mit einer Außenverzahnung ausgerüstet ist. Durch die erfolgte Drehbewegung des Exzenterrades, bei der gleichzeitig auch die Auf- oder Abwärtsbewegung des Messerhalters erfolgt, wird nunmehr über die Außenverzahnung die Zahnstange mitgenommen und über die Zahnstange die Außenverzahnung des zweiten Exzentertriebes in Umdrehung versetzt. Hierdurch wirkt also auch im Bereich dieses zweiten, nicht direkt über die Hebelvorrichtung angetriebenenExzentertriebes eine Druckbeaufschlagung auf denMesserhalter nach unten.

Die Zahnstange stützt sich dabei vorteilhafterweise innerhalb des auf- und abbeweglichen Messerhalters auf einer Stützplatte ab, und zwar unter Zwischenschaltung entsprechender Gleitlager, die beispielsweise aus Kunststoff gefertigt sein können oder aber auch aus Rollenlagern gebildet sein können.

Die Schneiden sind vorteilhafterweise als Einzelschneiden in an sich bekannter Weise ausgebildet und diese Einzelschneiden stützen sich in an sich bekannter Weise unter Zwischenschaltung von Gummipolstern am Messerhalter ab.

Ein Ausführungsbeispiel eines Steinspalters gemäß der Erfindung wird nachfolgend anhand der Zeichnungen erläutert. Die Zeichnungen zeigen dabei in
- Fig. 1: eine Seitenansicht aufgeschnitten eines Steinspalters gemäß der Erfindung und in
- Fig. 2: einen Schnitt durch den Steinspalter gemäß Fig. 1.

Der in den Zeichnungen dargestellte Steinspalter weist ein Gestell 1 auf, das mit einer Fußstütze 27 und einem Radpaar 28 ausgerüstet sein kann. Das Gestell 1 trägt einen Messerhalter 2 mit Einzelschneiden 3, die über Befestigungsmittel 4 am Messerhalter 2 festgelegt sind. Diese Einzelschneiden 3 wirken als Gegenschneiden.

Ein oberer Messerhalter 5 trägt Einzelschneiden 6. Die beiden Einzelschneiden 3 und 6 können in einer gemeinsamen Ebene aufeinanderzu bewegt werden, dadurch, daß der Messerhalter 5 nach unten bewegt wird, wobei zusätzlich der Messerhalter 5 höhenmäßig eingestellt werden kann.

Die Einstellung des Messerhalters 5 der Höhe nach erfolgt durch Stellmittel 7 und 8, die einen Träger 9 tragen, der den eigentlichen Messerhalter 5 auf- und abbeweglich trägt. Die Bewegung des Messerhalters 5 erfolgt über einen Exzentertrieb 10, der über eine Hebelvorrichtung 14 betätigt werden kann.

Ein durch ein Tragblech gebildeter Arbeitstisch 24 ist etwa in Höhe der Schnittfläche der zusammenarbeitenden Einzelschneiden 3 und 6 angeordnet und trägt im Einsatzfall das zu spaltende Steinmaterial Das Tragblech ist dabei nachgiebig gelagert, wie dies durch die Federlagerung 25, 26 angedeutet ist.

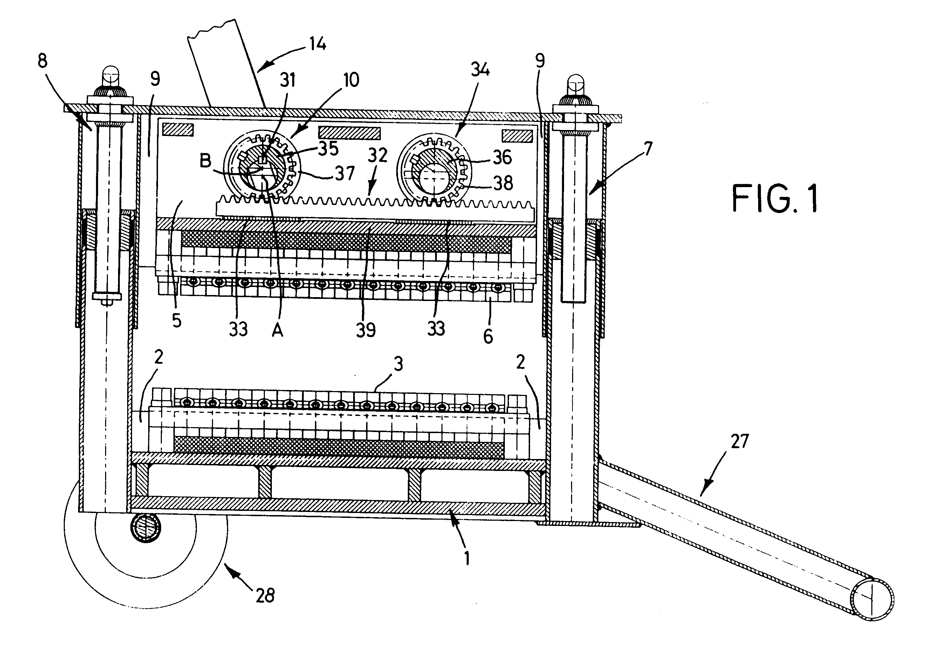

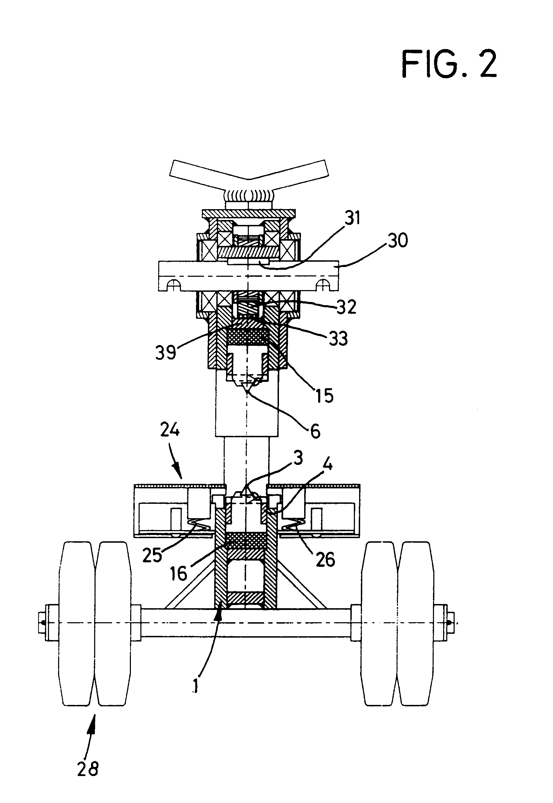

In Fig. 2 ist eine Welle 30 erkennbar, an der gabelförmig die Hebelvorrichtung 14, die in Fig. 1 erkennbar ist, anschließt. Auf der Welle 30 ist ein Exzenterrad 35 drehfest dadurch gelagert, daß eine entsprechende Keilverbindung 31 zwischen den beiden Bauteilen vorgesehen wird. Die Drehachse der Welle 30 ist bei A in Fig. 1 eingezeichnet, während die Drehachse des Exzenterrades 35 in Fig. 1 mit B bezeichnet ist.

Die Außenseite des Exzenterrades 35 weist einen Außenzahnkranz 37 auf, und es ist aus der Darstellung in Fig. 1 in Verbindung mit der Darstellung in Fig. 2 erkennbar, daß dann, wenn die Welle 30 über die Hebelvorrichtung 14 gedreht wird, auch das Exzenterrad 35 eine entsprechende Drehbewegung ausführt, dabei aber exzentrisch um die Drehachse A umläuft, so daß dadurch ein Druck nach unten erzeugt werden kann.

Dieser nach unten gerichtete Druck wirkt über eine Zahnstange 32 auf eine Stützplatte 39, die fest im Messerhalter 5 angeordnet ist, so daß dadurch die eigentlichen Einzelschneiden 6 nach unten bewegt werden. Die Druckübertragung erfolgt dabei unter Zwischenschaltung von Gummipolstern 15.

In gleicher Weise sind auch die Einzelschneiden 3 des unteren Messers über Gummipolster 16 ortsfest am Gestell 1 abgestützt.

Aus der Darstellung in Fig. 1 ist erkennbar, daß der mit der Hebelvorrichtung 14 in Verbindung stehende Exzentertrieb 10 außermittig innerhalb des eigentlichen Steinspalters angeordnet ist, und zwar außermittig in Richtung der Achse der Schneiden gesehen, und es ist ein zweiter Exzentertrieb 34 vorgesehen, der ebenfalls aus einem Exzenterrad 36 besteht, das einen Außenzahnkranz 38 aufweist. Dieser Außenzahnkranz 38 kämmt mit der Zahnstange 32 und es ist hieraus erkennbar, daß dann, wenn das Exzenterrad 35 eine Drehbewegung ausführt, über die Zahnstange 32 das Exzenterrad 36 des Exzentertriebes 34 gezwungen wird, ebenfalls eine Drehbewegung auszuführen.

Da es sich bei den beiden gedrehten Rädern 35 und 36 um Exzenterräder handelt, wird also auch im Bereich des Exzentertriebes 34 die Zahnstange 32 nach unten bewegt und hierdurch wird erreicht, daß über die gesamte Länge der Einzelschneiden 6 gesehen ein gleichmäßiger Druck auf die Einzelschneiden 6 ausgeübt wird.

Die Zahnstange 32 stützt sich dabei unter Zwischenschaltung von Gleitlagern 33 auf der Stützplatte 39 ab.

## Patentansprüche

1. Steinspalter mit einem den Arbeitstisch (24) tragenden Gestell (1), einem an seinen Außenenden über Stellmittel (7, 8) höhenverstellbar von dem Gestell (1) getragenen Träger (9) und parallel zum Träger (9) verlaufenden messerartigen Schneiden, von denen die Gegenschneide vom Gestell (1) getragen und die andere mittels einer Hebelvorrichtung (14) gegenüber dem Träger (9) auf die Gegenschneide zu beweglich ist, wobei durch die Hebelvorrichtung (14) wenigstens ein Exzentertrieb (10) betätigt wird, dadurch gekennzeichnet, daß zwei Exzentertriebe (10, 34) mit Exzenterrädern (35, 36) vorgesehen sind, beide Exzenterräder (35, 36) einen Außenzahnkranz (37, 38) aufweisen und beide Außenzahnkränze (37, 38) miteinander über eine bewegliche Zahnstange (32) verbunden sind.

2. Steinspalter nach Anspruch 1, dadurch gekennzeichnet, daß die Zahnstange (32) auf einer im Messerhalter (5) vorgesehenen Stützplatte (39) über Gleitlager (33) beweglich in Richtung der Schneidenlängsachse angeordnet ist.

3. Steinspalter nach Anspruch 1 oder 2, dadurch gekennzeichnet, daß die messerartigen Schneiden durch Einzelschneiden (3, 6) gebildet sind, die sich auf Gummipolstern (15, 16) abstützen.

## Claims

1. A stone or brick cleaver comprising a frame (1) supporting the work table (24), a support (9) supported at its outer ends by the frame (1) so as to be vertically adjustable by adjusting means (7, 8), and knife-type cutting edges running in parallel with the support (9), of which cutting edges the counter-cutting edge is supported by the frame (1) and the other can be moved towards the counter-cutting edge with respect to the support (9) by means of a lever device (14), at least one eccentric pinion (10) being actuated by the lever device (14), characterized in that two eccentric pinions (10, 34) are provided with eccentric wheels (35, 36), both eccentric wheels (35, 36) comprise outer gear rims (37, 38) and the two outer gear rims (37, 38) are connected together via a movable rack (32).

2. A stone or brick cleaver according to claim 1, characterized in that the rack (32) is arranged on a support plate (39) provided in the knife holder (5) so as to be movable by means of sliding bearings (33) in the direction of the longitudinal axis of the cutting edge.

3. A stone or brick cleaver according to claim 1 or claim 2, characterized in that the knife-type cutting edges are formed of individual cutting edges (3, 6) which are supported on rubber pads (15, 16).

## Revendications

1. Machine à couper la pierre comprenant un châssis (1) portant une table de travail (24), un support (9) porté de manière réglable en hauteur à ses extrémités extérieures par le châssis (1) par l'intermédiaire de moyens de réglage (7, 8) et des lames de type couteau parallèles au support (9), dont la contre-lame est portée par le châssis (1) et l'autre lame est mobile au moyen d'un mécanisme de levier (14) par rapport au support (9) en direction de la contre-lame, le mécanisme de levier (14) actionnant au moins une transmission à excentrique (10), caractérisée en ce que deux transmissions à excentrique (10, 34) sont pourvues de roues d'excentrique (35, 36), lesdites deux roues d'excentrique présentant une couronne à denture extérieure (37, 38) et les deux couronnes à denture extérieure (37, 38) étant reliées l'une à l'autre par une crémaillère (32) mobile.

2. Machine à couper la pierre selon la revendication 1, caractérisée en ce que la crémaillère (32) est disposée de manière mobile dans le sens de l'axe longitudinal des lames par l'intermédiaire de paliers de glissement (33) sur une plaque d'appui (39) prévue dans le porte-couteau (5).

3. Machine à couper la pierre selon la revendication 1 ou 2, caractérisée en ce que les lames de type couteau sont formées par des lames individuelles (3, 6) qui s'appuient sur des coussins de caoutchouc (15, 16).
